# EUROPEAN PATENT SPECIFICATION

(11) **EP 3 522 141 B1**
(45) Date of publication and mention of the grant of the patent: **21.04.2021**
(21) Application number: 17855664.3
(22) Date of filing: 07.09.2017
(51) Int. Cl.: G09F 19/12, G02B 3/06, G03B 35/00, G09F 19/14

(54) **LENTICULAR DISPLAY BODY, METHOD FOR FORMING LENTICULAR IMAGE, METHOD FOR MANUFACTURING LENTICULAR DISPLAY BODY, AND PROGRAM FOR FORMING LENTICULAR IMAGE**
LINSENFÖRMIGER ANZEIGEKÖRPER, VERFAHREN ZUR HERSTELLUNG EINES LINSENFÖRMIGEN BILDES, VERFAHREN ZUR HERSTELLUNG EINES LINSENFÖRMIGEN ANZEIGEKÖRPERS UND PROGRAMM ZUR BILDUNG EINES LINSENFÖRMIGEN BILDES
CORPS D'AFFICHAGE LENTICULAIRE, PROCÉDÉ DE FORMATION D'IMAGE LENTICULAIRE, PROCÉDÉ DE FABRICATION DE CORPS D'AFFICHAGE LENTICULAIRE ET PROGRAMME DE FORMATION D'IMAGE LENTICULAIRE

(30) Priority: 28.09.2016 JP 2016190166
(43) Date of publication of application: 07.08.2019
(73) Proprietor: FUJIFILM Corporation, Tokyo 106-8620 (JP)
(72) Inventor: UMEMORI, Kenichi, Fujinomiya-shi Shizuoka 418-8666 (JP); KATSUMOTO,Ryuichi, Fujinomiya-shi Shizuoka 418-8666 (JP)
(74) Representative: Hoffmann Eitle
(86) International application number: PCT/JP2017/032369
(87) International publication number: WO 2018/061706

(56) References cited:
- GB-A- 2 514 562
- JP-A- H11 212 024
- JP-A- H11 212 024
- JP-A- 2013 092 650
- JP-A- 2014 501 936
- US-A1- 2009 167 639

## Description

### BACKGROUND OF THE INVENTION

### 1. Field of the Invention

The present disclosure relates to a lenticular display, a method for manufacturing a lenticular display, and a data carrier with a program for forming a lenticular image stored thereon.

### 2. Description of the Related Art

A lenticular display has been known as a medium that displays different images depending on a viewing angle. In the lenticular display, a lenticular lens is used in which convex lenses are arranged side by side, and the convex lenses each have a convex surface.

Typically, in the lenticular display, image strips (lenticular image) obtained by combining a plurality of images that are interlaced are arranged on a back-face side (facing away from the surface of the convex lenses) of the lenticular lens. When these image strips are observed through the lenticular lens, one type or two or more types of images among the image strips are displayed depending on an observing angle.

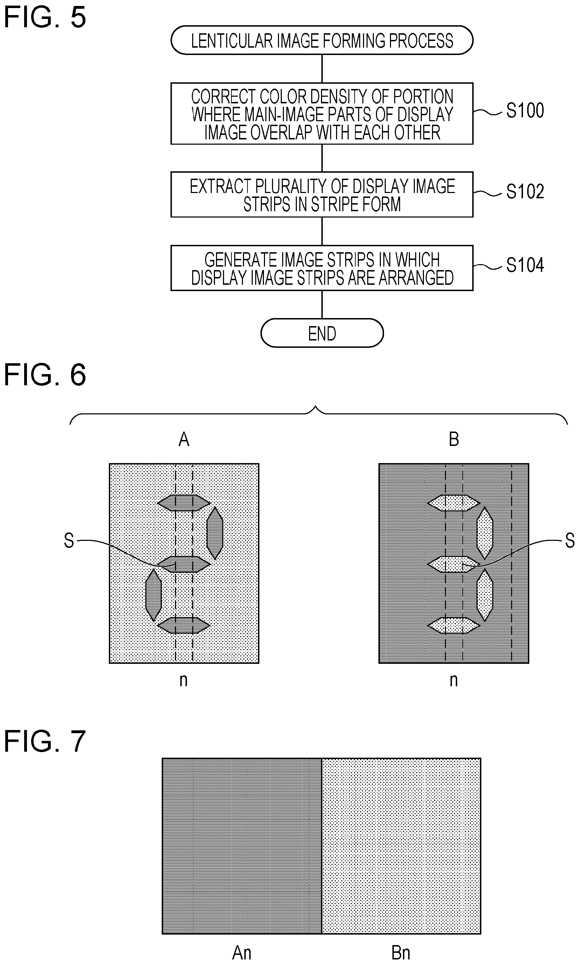

Now, as an example, a case where a display image A (hereinafter also referred to as "image A") and a display image B (hereinafter also referred to as "image B"), the display image A and the display image B including different characters, are displayed separately in one lenticular display will be described with reference to Figs. 6 to 8.

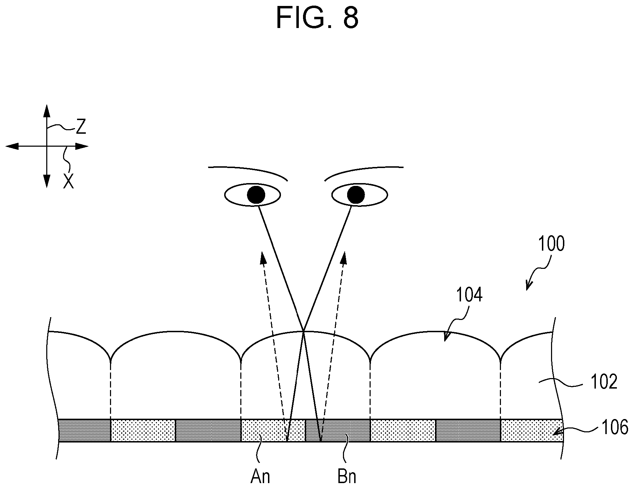

As illustrated in Fig. 8, a lenticular display 100 has a lenticular lens 104 in which a plurality of convex lenses 102 each having a convex surface are arranged side by side. On a back-face side of the lenticular lens 104 (bottom side in Fig. 8), display image strips An and Bn (hereinafter also referred to as "image strips An and Bn") for displaying display images A and B, respectively, are arranged side by side at corresponding positions so that the display images A and B are switched depending on a viewing angle. Note that a lenticular image 106 is constituted by the image strips An and Bn.

Specifically, a case where the lenticular display 100 includes the lenticular lens 104 in which, for example, N (N is an integer of 2 or more) convex lenses 102 are arranged side by side will be described. In this case, as illustrated in Fig. 6 for example, in a region S under an n-th (n is any integer of greater than or equal to 1 and less then or equal to N) convex lens 102 counting from one end in a direction in which the convex lenses 102 are arranged side by side, an image strip An and an image strip Bn are arranged side by side to be adjacent to each other in an interlaced manner as illustrated in Fig. 7. The image strips An and Bn are extracted by dividing the images A and B in a stripe form.

As illustrated in Fig. 8, under the first to N-th convex lenses 102, as in the n-th convex lens 102, the image strips An and Bn extracted from the images A and B, respectively, are arranged side by side at corresponding positions. Furthermore, a changing effect is obtained in which, depending on an angle at which an observer views the lenticular display 100 through the lenticular lens 104, the image A is displayed as a result of combination of the image strips An extracted from the image A, or the image B is displayed as a result of combination of the image strips Bn extracted from the image B.

By the way, it has been known that an afterimage is observed due to crosstalk when the image viewed by the observer is switched in the above manner.

Thus, a technique for reducing the afterimage is desired. For example, a technique for suppressing the crosstalk by providing a certain image between a left-eye image and a right-eye image of the lenticular image is known. As this type of technique, for example, JP1999-212024A (JP-H11-212024A) describes a technique for suppressing the generation of crosstalk by providing, in image display using the lenticular lens, a buffering region between compressed images (display image strips). The buffering region is an image having an intermediate density of the densities of the compressed images that are adjacent to each other. In addition, for example, JP2000-98948A describes a technique for arranging, in a display device for image display using a lenticular sheet, an image obtained by extracting a part with no change in image in the arrangement of the lenticular image in order to reduce the crosstalk.

JP 411212024A discloses an image display method of an image display device constituted so that a compressed image formed on an image sheet is observed through a lenticular screen consisting of lenticular lenses and a beltlike buffer area is provided between adjacent compressed images formed on the image sheet corresponding to one lenticular lens; when the adjacent compressed images are observed through the lenticular screen at a viewpoint position changing continuously, two images of those compressed images are observed while separated from each other because of the presence of the buffer area.

US 2009/0167639 A1 discloses methods of reducing perceived image crosstalk in a Multiview display. One method includes providing an image stream to a display having a horizontal dimension that extends from a first side of the display to an opposing second side of the display. The image stream includes a temporal sequence of images where at least a first image view and then a second image view are displayed on the display in a time sequential manner. The temporal sequence of images are conditioned before being displayed in order to reduce perceived displayed image crosstalk between the first and second image views. The conditioning includes modifying a color intensity of at least selected pixels along the horizontal dimension based on a non-constant crosstalk correction function for the horizontal dimension.

### SUMMARY OF THE INVENTION

However, with the technique for suppressing the crosstalk by providing a certain image between the left-eye image and the right-eye image of the lenticular image, as in the techniques described in JP1999-212024A (JP-H11-212024A) and JP2000-98948A, in some cases, the crosstalk is not sufficiently suppressed, and an afterimage that interrupts viewing is generated when a viewed image is switched.

The present disclosure provides a lenticular display, a method for manufacturing a lenticular display, and a program for forming a lenticular image that can reduce the feeling of afterimage at the time a viewed image is switched.

A lenticular display according to the present invention is defined by claim 1. The lenticular display comprises: a lenticular lens in which a plurality of convex lenses are arranged side by side, the plurality of convex lenses each having a convex surface; and a lenticular image provided on a back-face side facing away from the surface of the convex lenses, in which the lenticular image is a plurality of display image strips that are extracted from each of a plurality of display images in a stripe form and are arranged at corresponding positions under the convex lenses, and in which, in the plurality of display images, a color density of a portion where main-image parts overlap with each other is corrected.

Each of the plurality of display images has a main image part and a background image part, and the color density of the portion where the main-image parts overlap with each other may be corrected to an intermediate color of a color of the main image part and a color of the background image part.

Dependent claim relate to preferred embodiments. According to some preferred embodiments, the color density of the intermediate color may be greater than or equal to 5 % and less than 50 % of the color density of the background image part.

According to some preferred embodiments, the main image part may include at least one of a picture or a character.

A method for forming a lenticular display according to the present invention is defined by claim 4. The method includes the steps of: correcting, for each of a plurality of display images, a color density of a portion where main-image parts overlap with each other; extracting a plurality of display image strips in a stripe form from each of the plurality of display images whose color density has been corrected; and generating image strips in which the plurality of display image strips are arranged to be adjacent to each other at corresponding positions.

Each of
the plurality of display images has a main image part and a background image part, and the color density of the portion where the main-image parts overlap with each is corrected to an intermediate color of a color of the main image part and a color of the background image part.

Dependent claims relate to preferred embodiments. The main image part may include at least one of a picture or a character.

A method for manufacturing a lenticular display according to the present invention has a step of forming a lenticular image by the method for forming a lenticular image according to the present invention on a surface of a recording medium; and a step of bonding the surface of the recording medium on which the lenticular image is formed and a back face of a lenticular lens in which a plurality of convex lenses are arranged side by side, the plurality of convex lenses each having a convex surface, the back face facing away from the surface.

According to some preferred embodiments, the method has a step of forming a lenticular image by the method for forming a lenticular image on a back face of a lenticular lens in which a plurality of convex lenses are arranged side by side, the plurality of convex lenses each having a convex surface, the back face facing away from the surface.

In addition, a data carrier according to the present invention is defined by claim 8.

According to the present disclosure, it is possible to reduce the feeling of afterimage at the time a viewed image is switched.

### BRIEF DESCRIPTION OF THE DRAWINGS

Fig. 1 is a perspective view for illustrating an example of a configuration of a lenticular display according to an embodiment;
Fig. 2 is an explanatory view for explaining an example of a method for forming a lenticular image according to the embodiment;
Fig. 3 is an explanatory view for explaining an example of display images according to the embodiment;
Fig. 4 is a block diagram illustrating an example of a configuration of an image forming apparatus for forming a lenticular image according to the embodiment;
Fig. 5 is a flowchart illustrating an example of a lenticular image forming process for forming a lenticular image according to the embodiment;
Fig. 6 is an explanatory view for illustrating two display images separately displayed in a lenticular display of the related art;
Fig. 7 is an explanatory view for illustrating image strips the region S in Fig. 6; and
Fig. 8 is a side view for illustrating a thickness-direction configuration of the lenticular display of the related art including the image strips illustrated in Fig. 7.

### DESCRIPTION OF THE PREFERRED EMBODIMENTS

Hereinafter, examples of an embodiment for implementing the technique of the present disclosure will be described in detail with reference to drawings.

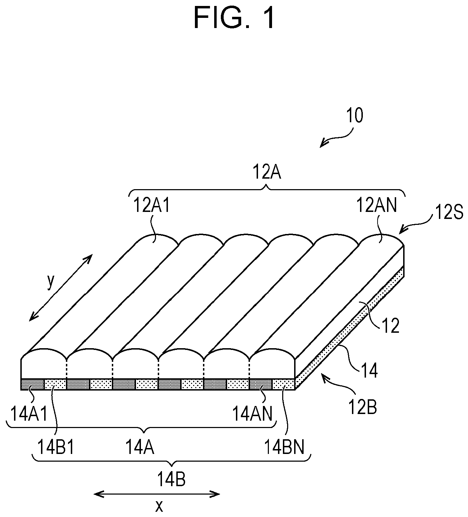

First, with reference to Figs. 1 to 3, a configuration of a lenticular display 10 according to this embodiment will be described. Note that in Fig. 1, x-direction represents a width direction of the lenticular display 10, and y-direction represents a length direction (longitudinal direction) of the lenticular display 10.

As illustrated in Fig. 1, the lenticular display 10 includes a lenticular lens 12 and a lenticular image 14.

### (Configuration of Lenticular Lens)

As illustrated in Fig. 1 as an example, in the lenticular lens 12 according to this embodiment, a plurality of convex lenses 12A (12A1 to 12AN, N is an integer of 2 or more and is 6 in the case illustrated in Fig. 1) are arranged side by side. The convex lenses 12A are each a cylindrical lens whose shape is substantially semi-cylindrical having a convex surface 12S (top face in Fig. 1), which is spherical, and a back face 12B (bottom face in Fig. 1) facing away from the surface 12S, and are arranged side by side in the width direction (x-direction).

The lenticular lens 12, that is, the convex lenses 12A, is formed of a resin material having a light transmitting property. Examples of the resin that constitutes the lenticular lens 12 include polymethylmethacrylate (PMMA), polycarbonate, polystyrene, methacrylate-styrene copolymer (MS resin), acrylonitrile-styrene copolymer (AS resin), polypropylene, polyethylene, polyethylene terephthalate (PET), glycol-modified PET, polyvinyl chloride (PVC), thermoplastic elastomer, copolymer of these, cyclo olefin polymer, and the like. Considering the easiness of melt extrusion, for example, it is preferable to use a resin with a low melt temperature, such as PMMA, polycarbonate, polystyrene, MS resin, polyethylene, PET, or glycol-modified PET. Since a lens shape formed on a surface of an embossing roller is easily transferred and a crack is unlikely to be generated in a lens layer at the time of embossing, it is more preferable to use glycol-modified PET. The lenticular lens 12 may also be configured to include a plurality of resins.

A width of each of the convex lenses 12A (lens pitch) is preferably greater than or equal to 50 µm and less than or equal to 900 µm for processability and a resolution of images. The lens pitch can be set as appropriate in accordance with the use of the lenticular display. For example, in a case where an observer observes the lenticular display by holding it, the lens pitch is preferably greater than or equal to 100 µm and less than or equal to 450 µm. This is because, in a case where the lenticular display is observed from a relatively short distance, the boundary between lenses becomes less jaggy, so that characters and the like are less difficult to read, when the lens pitch is not too large. In a case where the observer observes the lenticular display from a distant position (e.g., a distance of 50 cm or more facing the lenticular display provided on a wall or the like), the lens pitch is preferably greater than or equal to 200 µm and less than or equal to 850 µm, for example. Note that the lens pitch may be defined by LPI (Line Per Inch, the number of lenses per 1 inch (2.54 cm)) and may preferably be 100 LPI, 200 LPI, or the like, for example. In addition, on a back-face side of the convex lenses 12A, that is, on the back face 12B side of the lenticular lens 12, the lenticular image 14 is provided.

### (Configuration of Lenticular Image)

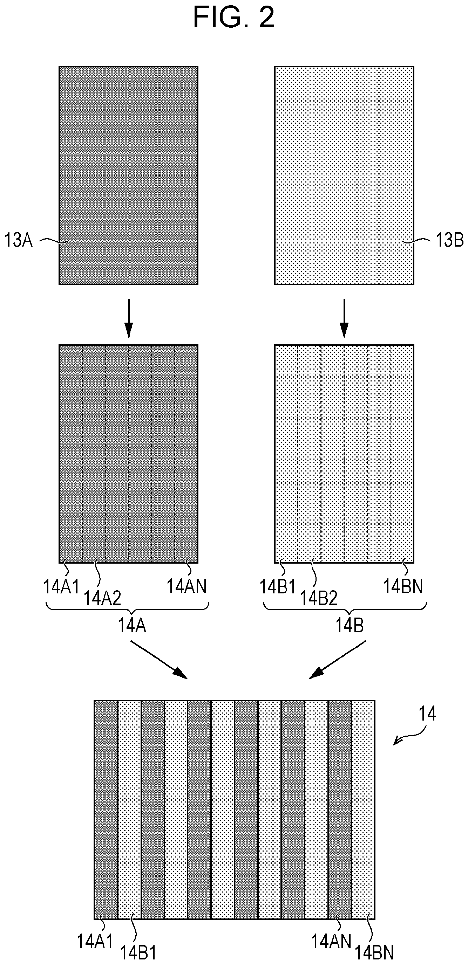

As illustrated in Fig. 2 as an example, the lenticular image 14 is constituted by image strips including display image strips 14A1 to 14AN and 14B1 to 14BN for displaying two display images 13A and 13B separately. Specifically, the display image strips 14A1 to 14AN and 14B1 to 14BN extracted in a stripe form from the display images 13A and 13B, respectively, are arranged to be adjacent to each other for each of the convex lenses 12A at corresponding positions.

Note that the "display image" in this embodiment means an image that is aimed to be displayed by the lenticular display 10, that is, an image that is aimed to be recognized by an observer when the observer observes the lenticular display 10 from the lenticular lens 12 side. In addition, the "display image strip" means a rectangular image that is arranged in parallel to y-direction of the lenticular lens 12 under the lenticular lens 12 and that constitutes a part of the display images 13A and 13B.

In addition, "display image 13" is used for collectively referring to the display images 13A and 13B without distinguishing one from the other. Likewise, "display image strip 14A" is used for collectively referring to the display image strips 14A1 to 14AN without distinguishing one from another, and "display image strip 14B" is used for collectively referring to the display image strips 14B1 to 14BN without distinguishing one from another.

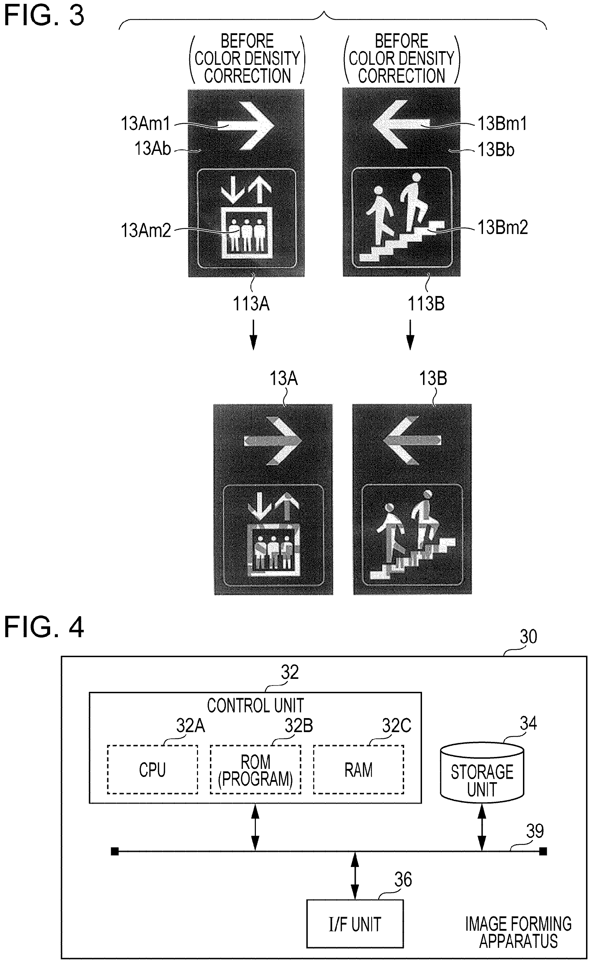

Fig. 3 illustrates an example of the display images 13A and 13B according to this embodiment. Note that in the example illustrated in Fig. 3, a case where a pictogram is a displayed image is illustrated. Note that the "pictogram" in this embodiment is an example of a "picture" in the present disclosure. As illustrated in Fig. 3, the display image 13A according to this embodiment includes two main-image parts 13Am1 and 13Am2 and a single background-image part 13Ab. In addition, the display image 13B according to this embodiment includes two main-image parts 13Bm1 and 13Bm2 and a single background-image part 13Bb. Note that in this embodiment, as a specific example, a case where a color of the main-image parts 13Am1, 13Am2, 13Bm1, and 13Bm2 (hereinafter referred to as "main image color") is white and where a color of the background-image parts 13Ab and 13Bb (hereinafter referred to as "background image color") is black will be described.

Note that in this embodiment, the "main-image part" means a part of the display image 13 that is viewed as if being switched when an observer observes the lenticular display 10 by changing the angle. In addition, the "background-image part" means a part of the display image 13 that is viewed as not being switched when the observer observes the lenticular display 10 by changing the angle and means a part other than the main-image part in this embodiment.

Furthermore, as illustrated in Fig. 3, in the display images 13A and 13B according to this embodiment, a color density at a portion where the main-image parts overlap with each other is corrected. Note that in an upper drawing in Fig. 3, for each of the display images 13A and 13B, display images 113A and 113B before correction of the color density in the overlap portion (before color density correction) are illustrated.

Note that in this embodiment, the "portion where the main-image parts overlap with each other" means a portion where the main-image parts overlap when the display image 13A and the display image 13B overlap with each other. Note that portions where the main-image parts overlap with each other are arranged adjacent to each other in a case of constituting the lenticular image 14. In the example illustrated in Fig. 3, the portion where the main-image parts overlap with each other is a portion where the main-image part 13Am1 and the main-image part 13Bm1 overlap with each other, and a portion where the main-image part 13Am2 and the main-image part 13Bm2 overlap with each other. Specifically, the portion where the main-image parts overlap with each other is an image of a portion where an arrow image that is the main-image part 13Am1 and an arrow image that is the main-image part 13Bm1 overlap with each other, and an image of a portion where a pictogram image representing an elevator that is the main-image part 13Am2 and a pictogram image representing stairs that is the main-image part 13Bm2 overlap with each other.

The portion where the main-image parts of the display image 13A and the main-image parts of the display image 13B overlap with each other is likely to be viewed as an afterimage because a color density is increased by the overlap of the main-image parts. Accordingly, in this embodiment, in order to suppress the afterimage and to make it easier to view the main-image parts even if the afterimage is generated, the color density of the portion where main-image parts of the display image 13A and the main-image parts of the display image 13B overlap with each other is corrected.

In the display images 13 according to this embodiment, the color density of the portion where the main-image part 13Am1 and the main-image parts 13Bm1 overlap with each other is corrected by using grey, which is an intermediate color of the main image color of the main-image parts 13Am1 and 13Bm1 and the background image color of the background-image parts 13Ab and 13Bb. In addition, in the display images 13, the color density of the portion where the main-image part 13Am2 and the main-image parts 13Bm2 overlap with each other is corrected by using grey, which is an intermediate color of the main image color of the main-image parts 13Am2 and 13Bm2 and the background image color of the background-image parts 13Ab and 13Bb.

The lenticular image 14 according to this embodiment is formed by an image forming apparatus 30, an example of which is illustrated in Fig. 4.

As illustrated in Fig. 4, the image forming apparatus 30 according to this embodiment may be a microcomputer or the like including a control unit 32, a storage unit 34, and an I/F (Interface) unit 36. The control unit 32, the storage unit 34, and the I/F unit 36 are connected to each other via a bus 39 so that information can be mutually transferred.

The control unit 32 includes a CPU (Central Processing Unit) 32A, a ROM (Read Only Memory) 32B, and a RAM (Random Access Memory) 32C and controls the entire image forming apparatus 30. The CPU 32A of the control unit 32 executes a program stored in the ROM 32B, and thereby a lenticular image forming process, an example of which is illustrated in Fig. 5, is executed, and the lenticular image 14 is formed.

In step S100 illustrated in Fig. 5, for each of the plurality of display images 13, the control unit 32 corrects a color density of a portion where the main-image parts overlap with each other. In this embodiment, as an example, the control unit 32 first acquires the plurality of display images 13. For example, in a case where the plurality of display images 13 are stored in the storage unit 34, the control unit 32 acquires the plurality of display images 13 by reading them from the storage unit 34.

Subsequently, from each of the plurality of display images (see display images 113A and 113B in Fig. 3), the control unit 32 extracts main images. For example, for every predetermined region in each of the plurality of display images, the control unit 32 performs image analysis of the overlap portion and calculates a degree of similarity of the predetermined region. Subsequently, the control unit 32 extracts, as the main-image parts, predetermined regions with a degree of similarity of less than a predetermined threshold value, that is, predetermined regions with a small degree of similarity, and extracts, as the background-image parts, predetermined regions with a degree of similarity of greater than or equal to the predetermined threshold value, that is, predetermined regions with a large degree of similarity.

Furthermore, the control unit 32 sets the color of the portion where the extracted main-image parts overlap with each other to an intermediate color of the main image color and the background image color, and corrects the color density thereof to a color density that is determined in advance for the background-image part (specifically, greater than or equal to 5 % and less than or equal to 50 %, which will be described later in detail). Note that information about what colors the main image color, the background image color, and the intermediate color are may be determined in advance or may be externally acquired through the I/F unit 36, and its acquisition method is not particularly limited.

Thus, the display images (see the display images 13A and 13B in Fig. 3) in which the color density of the portion where the main-image parts overlap with each other has been corrected is generated.

In the subsequent step S102, the control unit 32 extracts, from the plurality of display images in which the color density of the portion where the main-image parts overlap with each other has been corrected, a plurality of display image strips (see the display image strips 14A and 14B in Fig. 2) in a stripe form. The number of display image strips to be extracted is determined in accordance with the number of corresponding convex lenses 12A of the lenticular lens 12.

In the subsequent step S104, the control unit 32 generates image strips in which the extracted plurality of display image strips are arranged (see the lenticular image 14 in Fig. 2). Thus, since the lenticular image 14 according to this embodiment has been formed, this lenticular image forming process ends. The formed lenticular image 14 is externally output through the I/F unit 36 at a predetermined timing.

Furthermore, the lenticular display 10 according to this embodiment can be manufactured, as an example, through steps included in the following manufacturing method. Note that the term "step" in this specification is not only an independent step. Even if a step cannot be clearly distinguished from another step, as long as an expected object of the step is achieved, the step is included in this term.

In a case of manufacturing the lenticular display 10, first, as an example, the display image 13A and the display image 13B illustrated in Fig. 2 are each divided into a stripe form, and the display image strips 14A and 14B are extracted.

Subsequently, the display image strips 14A and 14B are each printed by an ink-jet method to corresponding positions on the back face of the lenticular lens 12, and thereby the lenticular image 14 is formed on the back face of the lenticular lens 12. Thus, the lenticular display 10 is manufactured. Note that the method for printing the display image strips 14A and 14B is not limited to the ink-jet method, and an electrophotography method, an offset printing method, or the like may also be used. For example, although any of the ink-jet method and the offset printing method can be preferably used for image formation, the thickness of the lenticular display is theoretically increased as the lens pitch is increased. Thus, the ink-jet method (more preferably, flat-head method) is more preferably used than the offset printing method in some cases.

In addition, for example, the lenticular display 10 can be manufactured through steps included in the following manufacturing method.

In a case of manufacturing the lenticular display 10, first, as an example, the display image 13A and the display image 13B illustrated in Fig. 2 are each divided into a stripe form, and the display image strips 14A and 14B are extracted.

Subsequently, the display image strips 14A and 14B are each printed by an ink-jet method to corresponding positions on a surface of a recording medium (illustration is omitted), and thereby the lenticular image 14 is formed on the surface of the recording medium.

Subsequently, the surface of the recording medium on which the lenticular image 14 is formed and the back face of the lenticular lens 12 are bonded together. Thus, the lenticular display 10 is manufactured.

### [Examples]

Hereinafter, evaluation results of the lenticular display 10 will be described by taking examples. However, the technique of the present disclosure is not limited to the following examples.

### (First Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 15 %. In addition, an image of the main-image parts was a pictogram image.

### (Second Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 15 %. In addition, an image of the main-image parts was an image representing characters.

### (Third Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was blue. Furthermore, a color of a portion where the main-image parts overlap with each other was sky blue, and its density was 15 %. In addition, the main-image parts were pictograms.

### (Fourth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was blue. Furthermore, a color of a portion where the main-image parts overlap with each other was sky blue, and its density was 15 %. In addition, the main-image parts were characters.

### (Fifth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 50 %. In addition, the main-image parts were pictograms.

### (Sixth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 5 %. In addition, the main-image parts were pictograms.

### (Seventh Example)

The lenticular lens 12 was formed of glycol-modified PET, and the lens pitch was set to 100 LPI. In addition, the lenticular image 14 was constituted by display image strips obtained from each of three display images 13. In addition, the main image color was white, and the background image color was black. Furthermore, a color of a portion where the main-image parts overlap with each other was grey, and its density was 15 %. In addition, the main-image parts were pictograms.

### (Eighth Example)

The lenticular lens 12 was formed of acrylic, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 15 %. In addition, the main-image parts were pictograms.

### (Ninth Example)

The lenticular lens 12 was formed of glycol-modified PET, and the lens pitch was set to 200 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 15 %. In addition, the main-image parts were pictograms.

### (Tenth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 2 %. In addition, the main-image parts were pictograms.

### (Eleventh Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 60 %. In addition, the main-image parts were pictograms.

### (Twelfth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 10 %. In addition, the main-image parts were pictograms.

### (Thirteenth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 20 %. In addition, the main-image parts were pictograms.

### (Fourteenth Example)

The lenticular lens 12 was formed of glycol-modified PET, and the lens pitch was set to 100 LPI. In addition, the lenticular image 14 was constituted by display image strips 14A and 14B obtained from two display images 13. In addition, the main image color was white, and the background image color was black. Furthermore, a color of a portion where the main-image parts overlap with each other was grey, and its density was 30 %. In addition, the main-image parts were pictograms.

### (First Comparative Example)

The lenticular lens was formed of glycol-modified PET, and the lens pitch was set to 100 LPI. In addition, the lenticular image was constituted by display image strips obtained from each of two display images. In addition, the main image color was white, and the background image color was black. Furthermore, a color of a portion where the main-image parts overlap with each other was white like the main image color, that is, the color density was not corrected, and its density was 0 %. In addition, the main-image parts were pictograms.

### (Second Comparative Example)

The lenticular lens was formed of glycol-modified PET, and the lens pitch was set to 100 LPI. In addition, the lenticular image was constituted by display image strips obtained from each of two display images. In addition, the main image color was white, and the background image color was black. Furthermore, a color of a portion where the main-image parts overlap with each other was white like the main image color, that is, the color density was not corrected, and its density was 0 %. In addition, the main-image parts were characters.

### (Evaluation Results)

In terms of the visibility (easiness to view) of an image depending on the generation of an afterimage, the first to fourteenth examples and the first and second comparative examples were evaluated in four grades: A to D, where grades A to C are allowable ranges as products. The evaluation results are shown in Table 1.

15

**[Table 1]**

| | Lenticular Lens | | Lenticular Image | | | | | | Evaluation |
|---|---|---|---|---|---|---|---|---|---|
| Example/ Comparative Example | Material | Lens Pitch | Number (Types) of Display Images | Number (Types) of Display Images | Main Image Color | Background Image Color | Color of Overlap Portion of Main Image Parts | Color Density of Overlap Portion (%) | Visibility |
| First Example | Glycol-modified PET | 100 | Pictogram | 2 Types | White | Black | Grey | 15 | A |
| Second Example | Glycol-modified PET | 100 | Character | 2 Types | White | Black | Grey | 15 | A |
| Third Example | Glycol-modified PET | 100 | Pictogram | 2 Types | White | Blue | Sky Blue | 15 | A |
| Fourth Example | Glycol-modified PET | 100 | Character | 2 Types | White | Blue | Sky Blue | 15 | A |
| Fifth Example | Glycol-modified PET | 100 | Pictogram | 2 Types | White | Black | Grey | 50 | B |
| Sixth Example | Glycol-modified PET | 100 | Pictogram | 2 Types | White | Black | Grey | 5 | B |
| Seventh Example | Glycol-modified PET | 100 | Pictogram | 3 Types | White | Black | Grey | 15 | A |
| Eighth Example | Acrylic | 100 | Pictogram | 2 Types | White | Black | Grey | 15 | A |
| Ninth Example | Glycol-modified PET | 200 | Pictogram | 2 Types | White | Black | Grey | 15 | A |
| Tenth Example | Glycol-modified PET | 100 | Pictogram | 2 Types | White | Black | Grey | 2 | C |
| Eleventh Example | Glycol-modified PET | 100 | Pictogram | 2 Types | White | Black | Grey | 60 | C |
| Twelfth Example | Glycol-modified PET | 100 | Pictogram | 2 Types | White | Black | Grey | 10 | A |
| Thirteenth Example | Glycol-modified PET | 100 | Pictogram | 2 Types | White | Black | Grey | 20 | A |
| Fourteenth Example | Glycol-modified PET | 100 | Pictogram | 2 Types | White | Black | Grey | 30 | B |
| First Comparative Example | Glycol-modified PET | 100 | Pictogram | 2 Types | White | Black | White | 0 | D |
| Second Comparative Example | Glycol-modified PET | 100 | Character | 2 Types | White | Black | White | 0 | D |

As shown in Table 1, when the portion where the main-image parts overlap with each other was set to the intermediate color and the color density thereof was greater than or equal to 5 % and less than 50 % of the color density of the background-image part, preferable visibility (grade B) was obtained. In addition, when the color density of the above intermediate color was greater than or equal to 10 % and less than 20 % of the color density of the background-image part, more preferable visibility (grade A) was obtained.

On the other hand, in the first and second comparative examples in which the color density of the portion where the main-image parts overlap with each other was not corrected, the color of the overlap portion, that is, white, was viewed as being thick, and an afterimage was generated. Thus, the image visibility was decreased compared with the examples.

As described above, the lenticular display 10 according to this embodiment has the lenticular lens 12, in which the plurality of convex lenses 12A having the surface 12S being a convex face are arranged side by side, and the lenticular image 14 provided on the back face 12B side facing away from the surface 12S of the convex lenses 12A. The lenticular image 14 is the plurality of display image strips 14A1 to 14AN and 14B1 to 14BN extracted from the plurality of display images 13, respectively, in a stripe form and arranged at corresponding positions under the convex lenses 12A, and in the plurality of display images 13, the color density of the portion where the main-image parts overlap with each other is corrected.

In the above manner, in the lenticular display 10 according to this embodiment, the color density of the portion where the main-image parts overlap with each other in each of the plurality of display images 13, which is viewed as an afterimage when an image viewed by an observer is switched, is corrected to a density at which the afterimage is not viewed or to a density at which visibility is good even if the afterimage is viewed. Thus, with the lenticular display 10 according to this embodiment, the feeling of afterimage at the time a viewed image is switched can be reduced.

In addition, in this embodiment, the color density of the display images 13 itself is corrected and the display image strips 14A and 14B are extracted from the display images 13 in a stripe form, and the lenticular image 14 is formed. Subsequently, the lenticular image 14 is printed on the lenticular lens 12, or combined by pasting together or the like, and thereby the lenticular display 10 is manufactured. Thus, for example, the method for manufacturing the lenticular display 10 becomes easy compared with a case where the crosstalk is suppressed by providing a certain image between the plurality of corresponding display image strips under each one of the convex lenses 12A of the lenticular image. In addition, according to this embodiment, it becomes easy to increase the resolution compared with a case where a certain image is provided between the plurality of display image strips.

Note that although one strip of the display image strips 14A and one strip of the display image strips 14B are arranged under each one of the convex lenses 12A in this embodiment, a plurality of strips of the display image strips 14A and 14B may be arranged under each one of the convex lenses 12A. By increasing the number of display image strips arranged under each one of the convex lenses 12A, the resolution can be increased.

In addition, although the lenticular display 10 displays two types of display images 13 (13A and 13B) in this embodiment, the lenticular display 10 may display three or more types of display images 13.

In addition, although a case where the main-image part includes at least one of a pictogram or a character has been described in this embodiment, what type of image the main-image part is is not particularly limited. For example, the main-image part may be a person's image in a photograph obtained by taking a person or the like.

In addition, although a case where the main-image part is a part of the display image 13 that is viewed as if being switched when an observer observes the lenticular display 10 by changing the angle has been described in this embodiment, the main-image part is not limited to this case. For example, in a case where there are a plurality of parts of the display image 13 that are viewed as if being switched, the main-image part may be an image including a main image therein, such as a person.

In addition, although a case in which the display image 13 includes the main-image part and the background-image part has been described in this embodiment, without being limited to this case, only the main-image part may be included such as in a case where the entire display image 13 is viewed as if being switched.

In addition, although a case where the main image color is the same in the plurality of display images 13 has been described in this embodiment, the present disclosure is not limited to this case. For example, the color of the main-image part 13Am1 in the display image 13A illustrated in Fig. 3 may be white, and the color of the main-image part 13Bm1 in the display image 13B may be red. In this case, for example, on the basis of white, red, and the color of the background-image parts 13Ab and 13Bb, the color with which the feeling of afterimage is the weakest may be obtained through experiments to perform correction to the obtained color, or correction to an intermediate color of all of these colors or a predetermined color among these may be performed. In addition, in a case where the main-image part in each of the plurality of display images 13 includes portions whose colors are different from each other, the color density of the portions of different colors does not have to be corrected.

In addition, although the surface 12S of the convex lenses 12A is spherical in this embodiment, for example, the surface 12S may be non-spherical as long as the surface 12S of the convex lenses 12A is a convex face. For example, the convex lenses 12A may have a shape that is triangular in cross sections.

Besides, it is needless to say that the configuration of the lenticular display 10 and the manufacturing method thereof, the configuration of the lenticular image 14 and the manufacturing method thereof, and the like described in this embodiment are examples

All of the documents, patent applications, and technical standards described in this specification are incorporated by reference in this specification as well as in a case where the individual documents, patent applications, and technical standards are specifically and individually referred to as being incorporated by reference.

### Reference Signs List

- 10: lenticular display
- 12: lenticular lens
- 12A, 12A1 to 12AN: convex lens
- 12S: surface
- 12B: back face
- 13, 13A, 13B: display image
- 13Am1, 13Am2, 13Bm1, 13Bm2: main-image part
- 13Ab, 13Bb: background-image part
- 14: lenticular image
- 14A, 14A1, 14A2 to 14AN: display image strip
- 14B, 14B1, 14B2 to 14BN: display image strip
- 30: image forming apparatus
- 32: control unit
- 32A: CPU
- 32B: ROM
- 32C: RAM
- 34: storage unit
- 36: I/F unit
- 39: bus
- 100: lenticular display
- 102: convex lens
- 104: lenticular lens
- 106: lenticular image
- 113A, 113B: display image (before color density correction)
- An, Bn: display image strip

## Claims

1. A lenticular display comprising:
a lenticular lens (12) in which a plurality of convex lenses (12A) are arranged side by side, the plurality of convex lenses (12A) each having a convex surface (12S); and
a lenticular image (14) provided on a back-face side facing away from the surface of the convex lenses (12A),
wherein the lenticular image (14) is a plurality of display image strips (14A1-14AN; 14B1-14BN) that are extracted from each of a plurality of display images (13A, 13B) in a stripe form and are arranged at corresponding positions under the convex lenses (12S),
wherein each of the plurality of display images (13A, 13B) has the main image part (13Am1, 13Am2) and a background image part (13Ab, 13Bb),
**characterized in that**
in the plurality of display images (13A, 13B), a color density of a portion where main-image parts (13Am1, 13Am2) overlap with each other is corrected to an intermediate color of a color of the main image part (13Am1, 13Am2) and a color of the background image part (13Ab, 13Bb).

2. The lenticular display according to claim 1,
wherein the color density of the intermediate color is greater than or equal to 5 % and less than 50 % of the color density of the background image part (13Ab, 13Bb).

3. The lenticular display according to any one of claims 1 to 2,
wherein the main image part (13Am1, 13Am2) includes at least one of a picture or a character.

4. A method for manufacturing a lenticular display according to claim 1 comprising the steps of:
correcting, for each of a plurality of display images (13A, 13B), a color density of a portion where main-image parts (13Am1, 13Am2) overlap with each other to an intermediate color of a color of the main image part (13Am1, 13Am2) and a color of a background image part (13Ab, 13Bb), each of the plurality of display images (13A, 13B) having the main image part (13Am1, 13Am2) and the background image part (13Ab, 13Bb);
extracting a plurality of display image strips (14A1-14AN; 14B1-14BN) in a stripe form from each of the plurality of display images (13A, 13B) whose color density has been corrected; and
generating image strips in which the plurality of display image strips (14A1-14AN; 14B1-14BN) are arranged to be adjacent to each other at corresponding positions.

5. The method for manufacturing a lenticular display according to claim 4, wherein the main image part (13Am1, 13Am2) includes at least one of a picture or a character.

6. A method for manufacturing a lenticular display according to claim 4 further comprising a step of bonding the surface of the recording medium on which the lenticular image (14) is formed and a back face of a lenticular lens (12) in which a plurality of convex lenses (12A) are arranged side by side, the plurality of convex lenses (12A) each having a convex surface (12S), the back face facing away from the surface.

7. A method for manufacturing a lenticular display, comprising:
a step of forming a lenticular image (14) by the method for forming a lenticular image according to any one of claims 4 or 5 on a back face of a lenticular lens (12) in which a plurality of convex lenses (12A) are arranged side by side, the plurality of convex lenses (12A) each having a convex surface (12S), the back face facing away from the surface.

8. The use of a data carrier with a program stored thereon for forming a lenticular image of a lenticular display according to claim 1, the program being configured to cause a computer to execute the method of claim 4 :
correcting, for each of a plurality of display images (13A, 13B), a color density of a portion where main-image parts (13Am1, 13Am2) overlap with each other to an intermediate color of a color of the main image part (13Am1, 13Am2) and a color of a background image part (13Ab, 13Bb), each of the plurality of display images (13A, 13B) having the main image part (13Am1, 13Am2) and the background image part (13Ab, 13Bb),
extracting a plurality of display image strips (14A1-14AN; 14B1-14BN) in a stripe form from each of the plurality of display images (13A, 13B) whose color density has been corrected, and
generating image strips in which the plurality of display image strips (13A, 13B) are arranged side by side at corresponding positions.

## Patentansprüche

1. Linsenförmige Anzeige, umfassend:
eine linsenförmige Linse (12), in der eine Vielzahl von konvexen Linsen (12A) nebeneinander angeordnet sind, wobei die Vielzahl von konvexen Linsen (12A) jeweils eine konvexe Oberfläche (12S) aufweisen; und
ein linsenförmiges Bild (14), das auf einer von der Oberfläche der konvexen Linsen (12A) abgewandten Rückseite bereitgestellt ist,
wobei das linsenförmige Bild (14) eine Vielzahl von Anzeigebildstreifen (14A1-14AN; 14B1-14BN) ist, die aus jedem einer Vielzahl von Anzeigebildern (13A, 13B) streifenförmig extrahiert sind und an entsprechenden Positionen unter den konvexen Linsen (12S) angeordnet sind,
wobei jedes aus der Vielzahl von Anzeigebildern (13A, 13B) den Hauptbildteil (13Am1, 13Am2) und einen Hintergrundbildteil (13Ab, 13Bb) aufweist,
**dadurch gekennzeichnet, dass**
in der Vielzahl von Anzeigebildern (13A, 13B) eine Farbdichte eines Abschnitts, in dem Hauptbildteile (13Am1, 13Am2) einander überlappen, auf eine Zwischenfarbe einer Farbe des Hauptbildteils (13Am1, 13Am2) und einer Farbe des Hintergrundbildteils (13Ab, 13Bb) korrigiert wird.

2. Linsenförmige Anzeige nach Anspruch 1,
wobei die Farbdichte der Zwischenfarbe größer als oder gleich 5 % und kleiner als 50 % der Farbdichte des Hintergrundbildteils (13Ab, 13Bb) ist.

3. Linsenförmige Anzeige nach einem der Ansprüche 1 bis 2,
wobei der Hauptbildteil (13Am1, 13Am2) mindestens eines von einem Bild oder einem Zeichen einschließt.

4. Verfahren zur Herstellung einer linsenförmigen Anzeige nach Anspruch 1, das die folgenden Schritte umfasst:
Korrigieren, für jedes aus einer Vielzahl von Anzeigebildern (13A, 13B), einer Farbdichte eines Abschnitts, in dem Hauptbildteile (13Am1, 13Am2) einander überlappen, auf eine Zwischenfarbe einer Farbe des Hauptbildteils (13Am1, 13Am2) und einer Farbe eines Hintergrundbildteils (13Ab, 13Bb), wobei jedes aus der Vielzahl von Anzeigebildern (13A, 13B) den Hauptbildteil (13Am1, 13Am2) und den Hintergrundbildteil (13Ab, 13Bb) aufweist;
Extrahieren einer Vielzahl von Anzeigebildstreifen (14A1-14AN; 14B1-14BN) streifenförmig aus jedem der Vielzahl von Anzeigebildern (13A, 13B), deren Farbdichte korrigiert wurde; und
Erzeugen von Bildstreifen, in denen die Vielzahl von Anzeigebildstreifen (14A1-14AN; 14B1-14BN) so angeordnet sind, dass sie an entsprechenden Positionen aneinander angrenzen.

5. Verfahren zur Herstellung einer linsenförmigen Anzeige nach Anspruch 4,
wobei der Hauptbildteil (13Am1, 13Am2) mindestens eines von einem Bild oder einem Zeichen einschließt.

6. Verfahren zur Herstellung einer linsenförmigen Anzeige nach Anspruch 4, das weiter
einen Schritt des Verbindens der Oberfläche des Aufzeichnungsmediums umfasst, auf dem das linsenförmige Bild (14) gebildet ist, und einer Rückseite einer linsenförmigen Linse (12), in der eine Vielzahl von konvexen Linsen (12A) nebeneinander angeordnet sind, wobei die Vielzahl von konvexen Linsen (12A) jeweils eine konvexe Oberfläche (12S) aufweisen, wobei die Rückseite von der Oberfläche abgewandt ist.

7. Verfahren zur Herstellung einer linsenförmigen Anzeige, umfassend:
einen Schritt des Bildens eines linsenförmigen Bildes (14) durch das Verfahren zum Bilden eines linsenförmigen Bildes nach einem der Ansprüche 4 oder 5 auf einer Rückseite einer linsenförmigen Linse (12), in der eine Vielzahl von konvexen Linsen (12A) nebeneinander angeordnet sind, wobei die Vielzahl von konvexen Linsen (12A) jeweils eine konvexe Oberfläche (12S) aufweisen, wobei die Rückseite von der Oberfläche abgewandt ist.

8. Verwendung eines Datenträgers mit einem darauf gespeicherten Programm zur Bildung eines linsenförmigen Bildes einer linsenförmigen Anzeige nach Anspruch 1, wobei das Programm konfiguriert ist, um einen Computer zu veranlassen, das Verfahren nach Anspruch 4 auszuführen:
Korrigieren, für jedes aus einer Vielzahl von Anzeigebildern (13A, 13B), einer Farbdichte eines Abschnitts, in dem Hauptbildteile (13Am1, 13Am2) einander überlappen, auf eine Zwischenfarbe einer Farbe des Hauptbildteils (13Am1, 13Am2) und einer Farbe eines Hintergrundbildteils (13Ab, 13Bb), wobei jedes aus der Vielzahl von Anzeigebildern (13A, 13B) den Hauptbildteil (13Am1, 13Am2) und den Hintergrundbildteil (13Ab, 13Bb) aufweist,
Extrahieren einer Vielzahl von Anzeigebildstreifen (14A1-14AN; 14B1-14BN) streifenförmig aus jedem aus der Vielzahl von Anzeigebildern (13A, 13B), deren Farbdichte korrigiert wurde, und
Erzeugen von Bildstreifen, in denen die Vielzahl von Anzeigebildstreifen (13A, 13B) an entsprechenden Positionen nebeneinander angeordnet sind.

## Revendications

1. Affichage lenticulaire comprenant :
une lentille lenticulaire (12) dans laquelle une pluralité de lentilles convexes (12A) sont agencées côte à côte, la pluralité de lentilles convexes (12A) ayant chacune une surface convexe (12S) ; et
une image lenticulaire (14) fournie sur un côté de face arrière faisant face à l'écart de la surface des lentilles convexes (12A),
dans lequel l'image lenticulaire (14) est une pluralité de bandes d'image d'affichage (14A1-14AN ; 14B1-14BN) qui sont extraites de chacune d'une pluralité d'images d'affichage (13A, 13B) dans une forme de bande et sont agencées à des positions correspondantes au-dessous des lentilles convexes (12S),
dans lequel chacune de la pluralité d'images d'affichage (13A, 13B) a la partie d'image principale (13Am1, 13Am2) et une partie d'image de fond (13Ab, 13Bb),
**caractérisé en ce que**
dans la pluralité d'images d'affichage (13A, 13B), une densité de couleur d'une portion où des parties d'image principale (13Am1, 13Am2) se chevauchent les unes les autres est corrigée par une couleur intermédiaire d'une couleur de la partie d'image principale (13Am1, 13Am2) et d'une couleur de la partie d'image de fond (13Ab, 13Bb).

2. Affichage lenticulaire selon la revendication 1,
dans lequel la densité de couleur de la couleur intermédiaire est supérieure ou égale à 5 % et inférieure à 50% de la densité de couleur de la partie d'image de fond (13Ab, 13Bb).

3. Affichage lenticulaire selon l'une quelconque des revendications 1 à 2,
dans lequel la partie d'image principale (13Am1, 13Am2) inclut au moins l'un parmi une photo ou un caractère.

4. Procédé de fabrication d'un affichage lenticulaire selon la revendication 1, comprenant les étapes suivantes :
la correction, pour chacune d'une pluralité d'images d'affichage (13A, 13B), d'une densité de couleur d'une portion où des parties d'image principale (13Am1, 13Am2) se chevauchent les unes les autres par une couleur intermédiaire d'une couleur de la partie d'image principale (13Am1, 13Am2) et d'une couleur d'une partie d'image de fond (13Ab, 13Bb), chacune de la pluralité d'images d'affichage (13A, 13B) ayant la partie d'image principale (13Am1, 13Am2) et la partie d'image de fond (13Ab, 13Bb) ;
l'extraction d'une pluralité de bandes d'image d'affichage (14A1-14AN ; 14B1-14BN) dans une forme de bande depuis chacune de la pluralité d'images d'affichage (13A, 13B) dont une densité de couleur a été corrigée ; et
la génération de bandes d'image dans lesquelles la pluralité de bandes d'image d'affichage (14A1-14AN ; 14B1-14BN) sont agencées pour être adjacentes les unes aux autres à des positions correspondantes.

5. Procédé de fabrication d'un affichage lenticulaire selon la revendication 4,
dans lequel la partie d'image principale (13Am1, 13Am2) inclut au moins l'un parmi une photo ou un caractère.

6. Procédé de fabrication d'un affichage lenticulaire selon la revendication 4, comprenant en outre
une étape de liaison de la surface du support d'enregistrement sur lequel l'image lenticulaire (14) est formée et d'une face arrière d'une lentille lenticulaire (12) dans laquelle une pluralité de lentilles convexes (12A) sont agencées côte à côte, la pluralité de lentilles convexes (12A) ayant chacune une surface convexe (12S), la face arrière faisant face à l'écart de la surface.

7. Procédé de fabrication d'un affichage lenticulaire, comprenant :
une étape de formation d'une image lenticulaire (14) par le procédé de formation d'une image lenticulaire selon l'une quelconque des revendications 4 ou 5 sur une face arrière d'une lentille lenticulaire (12) dans laquelle une pluralité de lentilles convexes (12A) sont agencées côte à côte, la pluralité de lentilles convexes (12A) ayant chacune une surface convexe (12S), la face arrière faisant face à l'écart de la surface.

8. Utilisation d'un support de données avec un programme stocké sur celui-ci pour former une image lenticulaire d'un affichage lenticulaire selon la revendication 1, le programme étant configuré pour amener un ordinateur à exécuter le procédé selon la revendication 4 :
la correction, pour chacune d'une pluralité d'images d'affichage (13A, 13B), d'une densité de couleur d'une portion où des parties d'image principale (13Am1, 13Am2) se chevauchent les unes les autres par une couleur intermédiaire d'une couleur de la partie d'image principale (13Am1, 13Am2) et d'une couleur d'une partie d'image de fond (13Ab, 13Bb), chacune de la pluralité d'images d'affichage (13A, 13B) ayant la partie d'image principale (13Am1, 13Am2) et la partie d'image de fond (13Ab, 13Bb),
l'extraction d'une pluralité de bandes d'image d'affichage (14A1-14AN ; 14B1-14BN) dans une forme de bande depuis chacune de la pluralité d'images d'affichage (13A, 13B) dont une densité de couleur a été corrigée, et
la génération de bandes d'image dans lesquelles la pluralité de bandes d'image d'affichage (13A, 13B) sont agencées côte à côte à des positions correspondantes.
